# EUROPÄISCHE PATENTSCHRIFT

(11) **EP 1 670 862 B1**
(45) Veröffentlichungstag und Bekanntmachung des Hinweises auf die Patenterteilung: **18.06.2008**
(21) Anmeldenummer: 04765848.9
(22) Anmeldetag: 06.10.2004
(51) Int. Cl.: C08L 77/00, C08L 77/10, C08K 5/5313, C08K 7/00

(54) **FLAMMGESCHÜTZTE POLYAMIDFORMMASSEN UND DEREN VERWENDUNG**
FLAME-PROOFED POLYAMIDE MOULDING MATERIALS AND THE USE THEREOF
MATIERES A MOULER IGNIFUGEES A BASE DE POLYAMIDES ET LEUR UTILISATION

(30) Priorität: 06.10.2003 DE 10346326
(43) Veröffentlichungstag der Anmeldung: 21.06.2006
(73) Patentinhaber: EMS-Chemie AG, 7013 Domat/Ems (CH)
(72) Erfinder: SCHNEIDER, Ewald, CH-7414 Fürstenau (CH)
(74) Vertreter: Pfenning, Meinig & Partner GbR
(86) Internationale Anmeldenummer: PCT/EP2004/011154
(87) Internationale Veröffentlichungsnummer: WO 2005/035664

(56) Entgegenhaltungen:
- EP-A- 0 345 486
- EP-A- 0 592 942
- EP-A- 0 792 912
- EP-A- 1 024 167
- WO-A-02/28953

## Beschreibung

Die Erfindung betrifft halogenfreie flammgeschützte Formmassen auf Basis von Mischungen von aliphatischen und teilaromatischen Polyamiden, die Salze von Phosphinsäuren als Flammschutzmittel enthalten. Weiterhin betrifft die Erfindung die Verwendung der erfindungsgemäßen Polyamidformmassen zur Herstellung von Formkörpern, insbesondere zu Bauteilen für die Elektro- und Elektronik-Industrie.

Formmassen auf Basis aliphatischer Polyamide werden aufgrund ihres ausgezeichneten Eigenschaftsprofils zur Herstellung von Formkörpern in einer Vielfalt von Anwendungsgebieten verwendet. Insbesondere für Bauteile in der Elektro- und Elektronik-Industrie werden Polyamidformmassen mit flammhemmenden Eigenschaften gefordert, um ausreichenden Brandschutz zu gewährleisten.

Polyamide werden häufig durch Zusatz von Halogenverbindungen flammhemmend ausgerüstet. Halogenhaltige Polyamidformmassen sind neben anderen Nachteilen toxikologisch bedenklich, da sie bei der Entsorgung durch Verbrennen halogenhaltige Substanzen freisetzen. Aus diesem Grund wurden einige halogenfreie Flammschutzsysteme für Polyamide entwickelt.

DE 1 931 387 beschreibt den Zusatz von Rotem Phosphor zu Polyamiden. Derartige Formmassen besitzen eine dunkle Eigenfarbe, was die Möglichkeiten zur Einfärbung erheblich einschränkt. Darüber hinaus sind bei der Herstellung und Verarbeitung von Polyamidformmassen mit Rotem Phosphor als Flammschutzmittel wegen der Bildung von toxischem Phosphin erhebliche Sicherheitsvorkehrungen notwendig.

Aus DE 195 25 873 ist die Verwendung von anorganischen Flammschutzmitteln, wie z.B. Magnesiumhydroxid bekannt. Für ausreichenden Flammschutz sind hohe Zusatzmengen erforderlich, was zu Formmassen mit reduzierter Festigkeit und hoher Sprödigkeit führt.

Stickstoffhaltige Flammschutzmittel, wie z.B. Melamin-cyanurat, sind unter anderen in EP 0 614 933 beschrieben. In Polyamiden, insbesondere in mit Glasfasern verstärkten Formulierungen besitzen sie eine eingeschränkte Wirksamkeit.

Für Glasfaser-verstärkte Polyamidformmassen werden unter anderen in EP 0 782 599 Phosphor/Stickstoff-haltige Flammschutzsysteme, wie z.B. Melamin-Polyphosphat vorgeschlagen. Für eine Brandklassierung nach UL94 von V0 sind Zusatzmengen von mindestens 25 Gew.-% notwendig, was Formmassen mit niedriger und nicht für jede Anwendung ausreichender Bruchdehnung liefert.

Als weitere Gruppe von halogenfreien Flammschutzmitteln werden Phosphorverbindungen vorgeschlagen. So ist aus EP 0.792 912 die Verwendung von Calcium- und Aluminiumsalzen der Phosphin- und Diphosphinsäuren als Flammschutzmittel für Polyamide beschrieben. Als besonders geeignete Polyamide werden Polyamid 6 und Polyamid 66 genannt. Daraus hergestellte Formmassen erreichen bei einer Zusatzmenge von 30 Gew.-% gemäß UL94 die Brandklasse V0 bei einer Probekörperdicke von 1.2 mm. Die Notwendigkeit hoher Dosierungen dieser Phosphinate wird auch in EP 1 024 167 A1 aufgezeigt. Wie aus Tabelle 1 der EP 1 024 167 zu entnehmen ist, sind für Glasfaser-verstärktes Polyamid 6 weit über 20 Gew.-%, für Glasfaserverstärktes Polyamid 66 über 30 Gew.-% an Aluminium-Phosphinat erforderlich, um eine UL94-Klassifizierung von V0 zu erreichen. Derartig hohe Zusatzmengen wirken sich negativ auf die mechanischen Eigenschaften aus. Sind die Formmassen infolge niedriger Bruchdehnung spröde, kann dies beispielsweise bei Bauteilen mit Schnappverbindungen, wie sie in der Elektroindustrie vielfach hergestellt werden, zu Problemen führen. Die Bauteile gehen üblicherweise nach der Spritzgussherstellung innert kurzer Zeit, d.h. ohne Konditionierung in die Montage, wo es zu erheblichen Störungen kommt, wenn diese Schnappverbindungen wegen der Sprödigkeit des Materials abbrechen. Um dies auszuschließen, werden für diese Anwendungen Formmassen mit einer Bruchdehnung im spritzfrischen Zustand von mindestens 2% gefordert.

Ausgehend hiervon ist es die Aufgabe der vorliegenden Erfindung eine neue Polyamidformmasse vorzuschlagen, die in ihren mechanischen Eigenschaften, insbesondere in ihrer Bruchdehnung gegenüber dem Stand der Technik, insbesondere gegenüber den Polyamidformmassen der EP 1 024 167 deutlich verbessert ist. Die Polyamidmasse soll weiterhin die Forderungen nach der Brandklasse V0 gemäß UL94 bei einer Prüfkörperdicke von max. 0,8 mm erfüllen.

Diese Aufgabe wird durch die Merkmale des Patentanspruches 1 gelöst.

Es wurde nun überraschenderweise gefunden, dass die in Anspruch 1 definierten Formmassen die Herstellung von Formkörper mit verbesserten mechanischen Eigenschaften insbesondere mit einer Bruchdehnung im spritzfrischen Zustand von mindestens 2 % ermöglichen. Die erfindungsgemäßen Formmassen zeichnen sich weiterhin dadurch aus, dass gegenüber dem Stand der Technik deutlich niedrige Zusatzmengen an Salzen von Phosphinsäure als Flammschutzmittel eingesetzt werden können und dass trotzdem eine Brandklassierung gemäß UL94 von v0 erreicht wird. Erfindungsgemäß wird dieser Effekt offensichtlich dadurch erreicht, dass bei den Formmassen der Erfindung auf Basis von aliphatischen Polyamiden ein Teil des aliphatischen Polyamins durch ein teilaromatisches Polyamid ersetzt wird.
Gegenstand der Erfindung ist somit eine flammgeschützte Polyamidformmasse bestehend aus
a) 20 - 80 Gew.-% eines oder mehrerer aliphatischer Polyamide
b) 1 - 40 Gew.-% eines oder mehrerer teilaromatischer Polyamide
c) 1 - 18 Gew.-% eines Flammschutzmittels bestehend aus einem Phosphinsäuresalz der Formel (I) und/oder einem Diphosphinsäuresalz der Formel (II) und/oder deren Polymere 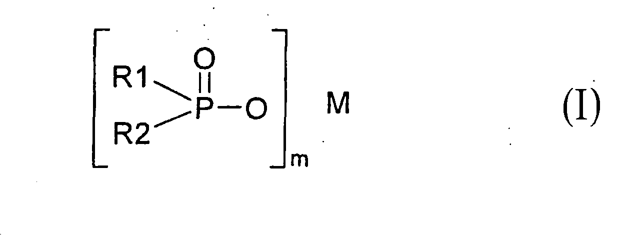 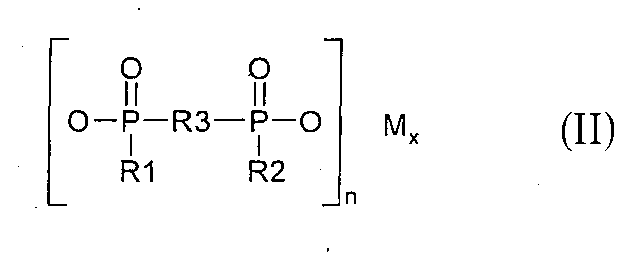 worin
   - R¹, R²: gleich oder verscheiden sind und C₁-C₆-Alkyl, linear oder verzweigt und/oder Aryl,
   - R³: C₁-C₁₀-Alkylen, linear oder verzweigt, C₆-C₁₀-Arylen, -Alkylarylen oder Arylalkylen;
   - M: Metallion aus der 2. oder 3. Haupt-oder Nebengruppe des Periodensystems;
   - m: 2 oder 3;
   - n: 1 oder 3;
   - x: 1 oder 2
   bedeuten,
d) 5 - 60 Gew.-% eines faser- oder teilchenförmigen Füllstoffes oder deren Mischungen
e) 0.05 - 10 Gew.-% üblicher Additive, bestehend aus Stabilisatoren, Verarbeitungshilfsmittel, Antidripping-Mittel, Farbstoffen, Pigmenten.

Als erfindungsgemäße aliphatische Polyamide (a) können Homopolyamide und Copolyamide eingesetzt werden, deren wiederkehrende Einheiten sich von aliphatischen Aminen und aliphatischen Dicarbonsäuren oder von Aminocarbonsäuren ableiten, wobei diese Aminocarbonsäuren auch in Form ihrer Lactame zum Einsatz kommen können. Typische Vertreter sind Polyamid.6, Polyamid 11, Polyamid 12, Polyamid 66, Polyamid 66/6, Polyamid 46.

Als erfindungsgemäße teilaromatische Polyamide (b) können entweder Homopolyamide oder Copolyamide eingesetzt werden, deren wiederkehrende Einheiten aus Dicarbonsäuren und Diaminen sowie aus Aminocarbonsäuren bzw. der entsprechenden Lactame abgeleitet sind. Geeignete Dicarbonsäuren sind aromatische und aliphatische Dicarbonsäuren wie beispielsweise Terephthalsäure, Isophthalsäure, Adipinsäure, Azelainsäure, Sebazinsäure, Dodekandicarbonsäure und 1,4-Cyclohexandicarbonsäure. Geeignete Diamine sind aliphatische und cycloaliphatische Diamine wie beispielsweise Hexa-methylendiamin, Nonamethylendiamin, Dekamethylendiamin, Dodekamethylen-diamin, 2-Methylpentamethylendiamin, 1,4-Cyclohexandiamin, Di-(4-di-aminocyclo-hexyl)-methan, Di-(3-methyl-4-aminocyclohexyl)-methan, sowie Diamine mit aromatischen Gruppen wie m-Xylylendiamin und p-Xylylendiamin. Geeignete Aminocarbonsäuren sind Aminocapronsäure, Aminoundecansäure und Aminolaurinsäure. Typische.Vertreter sind Polyamid 61, Polyamid 6T/6I, Polyamid 6T/6, Polyamid 6T/66, Polyamid 6T/6I/66, Polyamid 9T, Polyamid 10T, Polyamid 12T, Polyamid 6T/12, Polyamid MXD6.

Bei den Flammschutzmitteln (c) gemäß der Erfindung handelt es sich um Salze der Phosphinsäure der Formel (I) und/oder der Diphosphinsäure der Formel (II) 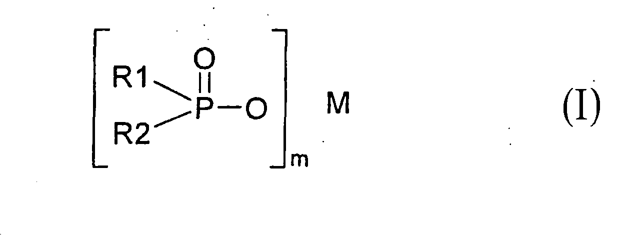 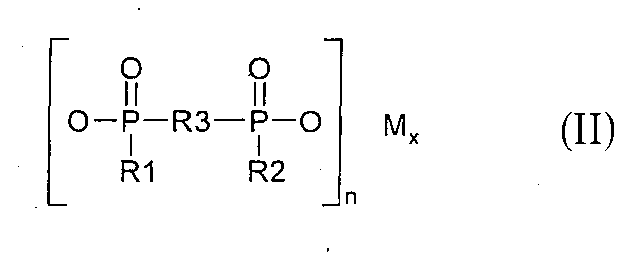 worin
- R¹, R²: gleich oder verscheiden sind und C₁-C₆-Alkyl, linear oder verzweigt und/oder Aryl,
- R³: C₁-C₁₀-Alkylen, linear oder verzweigt, C₆-C₁₀-Arylen, -Alkylarylen oder Arylalkylen;
- M: Metallion aus der 2. oder 3. Hauptoder Nebengruppe des Periodensystems;
- m: 2 oder 3;
- n: 1 oder 3;
- x: 1 oder 2
bedeuten, und/oder deren Polymere.

Geeignete Phosphinsäuren für die Herstellung der erfindungsgemäßen Phosphinsäuresalze sind beispielsweise Di-methylphosphinsäure, Ethyl-methylphosphinsäure; Diethylphosphinsäure, Methyl-n-propylphosphinsäure, Methan-di(methylphosphinsäure), Ethan-1,2-di(methylphosphinsäure), Hexan-1,6-di(methylphosphinsäure), Benzol-1,4-di(methyl-phosphinsäure), Methyl-phenyl-phosphinsäure, Diphenylphosphinsäure.

Die erfindungsgemäßen Phosphinsäuresalze können nach bekannten Methoden, wie sie beispielsweise in EP 0 699 708 beschrieben sind, hergestellt werden. Die Phosphinsäuren werden dabei in wässriger Lösung mit Metallcarbonaten, Metallhydroxiden oder Metalloxiden umgesetzt, wobei im Wesentlichen monomere, je nach Reaktionsbedingungen unter Umständen auch polymere Phosphinsäuresalze entstehen.

Die Phosphinsäuresalze gemäß den Formeln (I) und (II) können Ionen von Metallen aus der 2. oder 3. Haupt- oder Nebengruppe des Periodensystems enthalten, bevorzugt werden die Calcium- und Aluminium-Salze der Phosphinsäuren. Diese Phosphinsäuresalze können auch in Form ihrer Gemische eingesetzt werden. Sie werden bevorzugt in Pulverform angewendet, um bei der Einarbeitung in das Polymere eine gute Dispergierung zu erzielen.

Die erfindungsgemäßen Formmassen enthalten als Komponente c) 1 - 12, bevorzugt 5 -15 Gew % des Phosphinsäuresalzes der Formel (I) und/oder ein Diphosphinsäuresalz der Formel (II) und/oder deren Polymere.

Als Komponente d) können die erfindungsgemäßen Formmassen 5 - 60 Gew.-% an faser- oder teilchenförmigen Füllstoffen oder deren Mischungen enthalten. Als Beispiele für faserförmige Füllstoffe seien faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den Polyamiden können die verwendeten Glasfasern mit einer Schlichte und einem Haftvermittler ausgerüstet sein. Der Durchmesser der üblicherweise verwendeten Glasfaser liegt im Bereich von 6 - 20 µm.

Als teilchenförmige Füllstoffe eignen sich unter anderen Glaskugeln, Kreide, gepulverter Quarz, Talkum, Wollastonit, Kaolin, Glimmer.

Übliche Additive als Komponente e) sind beispielsweise Wärmeschutzmittel, Antioxidantien, Lichtschutzmittel, Gleitmittel, Entformungsmittel, Nukleierungsmittel, Pigmente, Farbstoffe, Antdripping-Mittel.

Die erfindungsgemäßen flammgeschützten Polyamidformmassen können nach an sich bekannten Verfahren hergestellt werden. Dazu werden die Bestandteile in einem Compoundieraggregat, z.B. ein Doppelschneckenextruder, homogenisiert. Ein übliches Vorgehen besteht darin, die Komponenten a) bis e) einzeln oder vorgemischt über separate Dosieranlagen in das Compoundieraggregat einzubringen. Die Homogenisierung in der Polymerschmelze erfolgt bei Temperaturen, die je nach Schmelzpunkt des teilaromatischen Polyamids bei 200 - 350°C liegen. Die Schmelze wird üblicherweise als Strang abgezogen, gekühlt und granuliert.

Die erfindungsgemäßen Formmassen eignen sich zur Herstellung von Formkörpern nach dem Spritzgussverfahren.

In den Beispielen wurden folgende Ausgangsstoffe zur Herstellung erfindungsgemäßer Formmassen eingesetzt:

### Komponente a)

| | |
|---|---|
| Polyamid al: | Polyamid 6, relative Viskosität (1% in H2S04) = 2.75 |
| Polyamid a2: | Polyamid 66, relative Viskosität (1% in H2SO4) = 2.67 |

### Komponente b)

| | |
|---|---|
| Polyamid b1: | Polyamid 6I/6T mit einem Verhältnis von Isophthalsäure zu Terephthalsäure von 67:33, relative Viskosität (0.5% in m-Kresol) = 1.72 |
| Polymaid b2: | Polyamid 6T/66 mit einem molaren Verhältnis von Terephthalsäure zu Adipinsäure von 55:45, relative Viskosität (0.5% in m-Kresol) = 1.69 |
| Polyamid b3: | Polyamid 6T/6I mit einem Verhältnis von Terephthalsäure zu Isophthalsäure von 70:30, relative Viskosität (0.5% in m-Kresol) =1.135. |
| Polyamid b4: | Polyamid MXD6, relative Viskosität (0.5% in m-Kresol) = 1.85 |

### Komponente c)

Aluminium-Diethylphosphinat
Calcium-Methyl-propylphosphinat

### Komponente d)

Standard-Glasfaser für Polyamide, Faserlänge 4.5mm,
Durchmesser 10µm

### Komponente e)

Irganox 10.98 (Ciba Specialities)
Ca-Stearat

### Beispiele

Die Ausgangsstoffe wurden in den in Tabelle 1 aufgeführten Mengen, die jeweils in Gew.-% angegeben sind, mittels eines ZSK30 Zweischnecken-Extruders von Werner & Pfleiderer zu den entsprechenden Formmassen compoundiert. Die Komponenten a), b) und e) wurden vorgemischt und so wie Komponente c) über Dosierwaagen in die Einzugszone des Extruder gefördert. Die Glasfasern wurden über einen Side-Feeder zugeführt. Die Homogenisierung der Komponenten erfolgte bei Temperaturen von 260-310 °C.

Die Formmassen wurden als Strang ausgetragen, in einem Wasserbad gekühlt und anschließend granuliert. Das Granulat wurde auf einen Feuchtegehalt von unter 0.08 % getrocknet und auf einer Spritzgussmaschine zu Prüfkörpern verarbeitet. Es wurden daran folgende Prüfungen durchgeführt:
- Brandtest nach UL-94 an Prüfkörpern mit einer Dicke von 0.4, 0.8 oder 1.6 mm nach üblicher Konditionierung
- Elastizitätsmodul nach ISO 527, spritzfrisch
- Bruchdehnung nach ISO 527, spritzfrisch
- Bruchspannung nach ISO 527, spritzfrisch
- Schlagzähigkeit bei 23 °C nach ISO 179/1eU, spritzfrisch

### Tabelle 1

| | | Vergleichsbeispiel 1 | Beispiel 1 | Beispiel2 |
|---|---|---|---|---|
| Zusammensetzung Gew.% | | | | |
| Polyamid a1 | | | | |
| Polyamid a2 | | 39.4 | 43.0 | 47.4 |
| Polyamid b1 | | | 14.4 | |
| Polyamid b2 | | | | |
| Polyamid b3 | | | | 8 |
| Polyamid b4 | | | | |
| Al-Diethylphosphinat | | 30 | 12 | 14 |
| Ca-Mehyl-propylphosphinat | | | | |
| Glasfaser | | 30 | 30 | 30 |
| Irganox 1098 | | 0.25 | 0.25 | 0.25 |
| Ca-Stearat | | 0.35 | 0.35 | 0.35 |

| Prüfungen | | | | |
|---|---|---|---|---|
| Brandtest UL-94 | Klassierung | | | |
| 0.4 mm | | | V-0 | |
| 0.8 mm | | n.k. | V-0 | V-0 |
| 1.6 mm | | V-2 | | V-0 |
| Elastizitätsmodul | MPa | 10600 | 10900 | 10600 |
| Bruchspannung | MPa | 130 | 147 | 135 |
| Bruchdehnung | % | 1.7 | 3.1 | 2.3 |
| Schlagzähigkeit | kJ/m² | 49 | 52 | 48 |

### Tabelle 2

| | | Vergleichsbeispiel 2 | Beispiel3 | Beispiel4 |
|---|---|---|---|---|
| Zusammensetzung Gew.% | | | | |
| Polyamid a1 | | 39.4 | 40.0 | 18.7 |
| Polyamid a2 | | | | 18.7 |
| Polyamid b1 | | | | |
| Polyamid b2 | | | 10 | |
| Polyamid b3 | | | | |
| Polyamid b4 | | | | 12 |
| Al-Diethylphosphinat | | | | |
| Ca-Methyl-propylphosphinat | | 25 | 14 | 15 |
| Glasfaser | | 35 | 35 | 35 |
| Irganox 1098 | | 0.25 | 0.25 | 0.25 |
| Ca-Stearat | | 0.35 | 0.35 | 0.35 |
| Prüfungen | | | | |
| Brandtest UL-94 | Klassierung | | | |
| 0.4 mm | | | V-0 | |
| 0. 8 mm | | n.k. | V-0 | V-0 |
| 1.6 mm | | V-1 | | V-0 |
| Elastizitätsmodul | MPa | 11000 | 10900 | 10500 |
| Bruchspannung | MPa | 140 | 152 | 145 |
| Bruchdehnung | % | 1.8 | 2.9 | 2.8 |
| Schlagzähigkeit | kJ/m² | 50 | 52 | 58 |

## Patentansprüche

1. Flammgeschützte Polyamidformmassen bestehend aus
a) 20 - 80 Gew.-% eines oder mehrerer aliphatischer Polyamide
b) 1 - 4.0 Gew.-% eines oder mehrerer teilaromatischer Polyamide
c) 1 - 18 Gew.-% eines Flammschutzmittels bestehend aus einem-phosphinsäuresalz der Formel (I) und/oder ein Diphosphinsäuresalz der Formel (II) und/oder deren Polymere 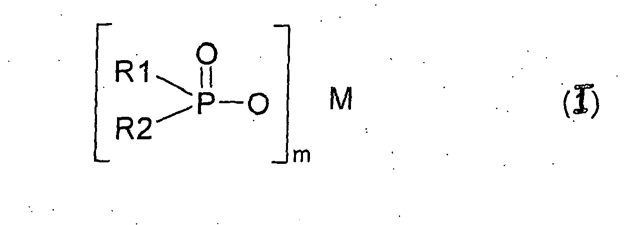 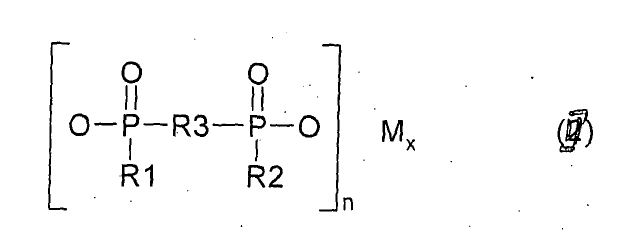 worin
R¹, R² gleich oder verschieden sind und C₁-C₆-Alkyl, linear oder verzweigt und/oder Aryl,
R³ C₁-C₁₀-Alkylen, linear oder verzweigt, C₆-C₁₀-Arylen, -Alkylarylen oder Arylalkylen;
M Metallion aus der 2. oder 3. Haupt- oder Nebengruppe des Periodensystems;
m 2 oder 3;
n 1 oder 3;
x 1 oder 2
bedeuten,
d) 5 - 60 Gew.-% eines faser- oder teilchenförmigen Füllstoffes oder deren Mischungen
e) 0.05 - 10 Gew. - % Additive ausgewählt aus Stabilisatoren, Verarbeitungshilfsmittel, Anti-Dripping-Mittel, Farbstoffe und/oder Pigmente.
wobei die Summe aus den Anteilen a) bis e) 100 Gew.-% ergibt.

2. Flammgeschützte Polyamidformmasse nach Anspruch 1, **dadurch gekennzeichnet, dass** sie 5-15 Gew.-% des Flammschutzmittels enthält.

3. Flammgeschützte Polyamidformmasse nach Anspruch 1 oder 2,'**dadurch gekennzeichnet, dass** die aliphatischen Polyamide a) aus der Gruppe, gebildet durch Homo- und Copolyamide, deren wiederkehrende Einheiten sich von aliphatischen Aminen, aliphatischen Dicarbonsäuren und/oder aliphatischen Aminocarbonsäuren ableiten, wobei die Aminocarbonsäuren auch in Form ihrer Lactame zum Einsatz kommen können, ausgewählt sind.

4. Flammgeschützte Polyamidformmasse nach mindestens einem der Ansprüche 1 bis 3, **dadurch gekennzeichnet, dass** die teilaromatischen Polyamide b) aus der Gruppe, gebildet durch Polyamide, deren wiederkehrende Einheiten abgeleitet sind von mindestens einer aromatischen Dicarbonsäure, gegebenenfalls einer oder mehrerer aliphatischer Dicarbonsäuren und einem oder mehrerer aliphatischer und/oder cycloaliphatischer Diamine, ausgewählt sind.

5. Flammgeschützte Polyamidformmasse nach mindestens einem der Ansprüche 1 bis 3, **dadurch gekennzeichnet, dass** die teilaromatischen Polyamide b) aus der Gruppe, gebildet durch Polyamide, deren wiederkehrende Einheiten abgeleitet sind von mindestens einer aliphatischen Dicarbonsäure, gegebenenfalls einer oder mehrerer aromatischer Dicarbonsäuren und p-Xylylendiamin und/oder m-Xylylendiamin, ausgewählt sind.

6. Flammgeschützte Polyamidformmasse nach mindestens einem der Ansprüche 1 bis 5, **dadurch gekennzeichnet, dass** die teilaromatischen Polyamide b) aus der Gruppe, gebildet durch Polyamide, deren wiederkehrende Einheiten abgeleitet sind von Terephthalsäure und/oder Isophthalsäure und gegebenenfalls Adipinsäure sowie Hexamethylendiamin, ausgewählt sind.

7. Flammgeschützte Polyamidformmasse nach mindestens einem der Ansprüche 1 bis 6, **dadurch gekennzeichnet, dass** als Flammschutzmittel c) ein Phosphinsäuresalz der Formel (I) und/oder ein Diphosphinsäuresalz der Formel (II) und/oder deren Polymere, worin M für Calcium- oder Aluminium-Ionen steht, eingesetzt wird.

8. Verwendung der flammgeschützten Formmassen nach einem der Ansprüche 1 bis 7 zur Herstellung von Formkörpern.

9. Verwendung der flammgeschützten Formmassen nach Anspruch 8 zur Herstellung von Formkörpern, die die Forderung nach Brandklasse V0 gemäß UL94 bei einer Prüfkörperdicke von max. 0.8 mm erfüllen.

## Claims

1. Flameproofed polyamide moulding compounds consisting of
a) 20 - 80% by weight of one or more aliphatic polyamides,
b) 1 - 40% by weight of one or more partially aromatic polyamides,
c) 1 - 18% by weight of a flameproofing agent consisting of a phosphinic acid salt of Formula (I) and/or a diphosphinic acid salt of Formula (II) and/or polymers thereof 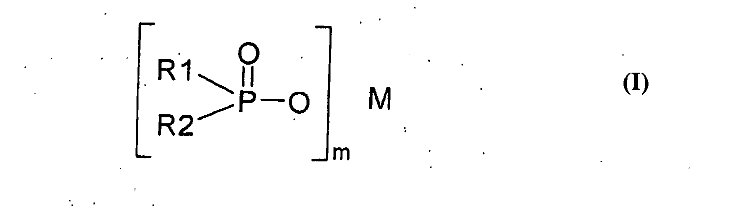 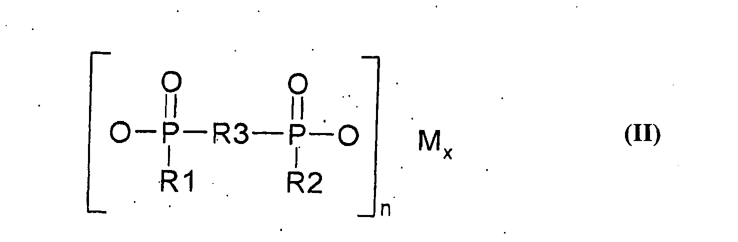 wherein
R¹, R² are identical or different and represent C₁-C₆ alkyl, linear or branched, and/or aryl,
R³ represents C₁-C₁₀ alkylene, linear or branched, C₆-C₁₀ arylene, alkylarylene or arylalkylene;
M represents a metal ion from the 2nd or 3rd main or subgroup of the periodic table;
m represents 2 or 3;
n represents 1 or 3;
x represents 1 or 2,
d) 5 - 60% by weight of a fibrous or particulate filler or mixtures thereof,
e) 0.05 - 10% by weight additives, selected from stabilisers, processing aid, anti-dripping agent, colouring agents and/or pigments,
the total of the components a) to e) making up 100% by weight.

2. A flameproofed polyamide moulding compound according to Claim 1, **characterised in that** it contains 5-15% by weight of the flameproofing agent.

3. A flameproofed polyamide moulding compound according to Claim 1 or 2, **characterised in that** the aliphatic polyamides a) are selected from the group formed by homo- and copolyamides, the recurring units of which are derived from aliphatic amines, aliphatic dicarboxylic acids and/or aliphatic aminocarboxylic acids, the aminocarboxylic acids also possibly being used in the form of their lactams.

4. A flameproofed polyamide moulding compound according to at least one of Claims 1 to 3, **characterised in that** the partially aromatic polyamides b) are selected from the group formed by polyamides, the recurring units of which are derived from at least one aromatic dicarboxylic acid, optionally one or more aliphatic dicarboxylic acids and one or more aliphatic and/or cycloaliphatic diamines.

5. A flameproofed polyamide moulding compound according to at least one of Claims 1 to 3, **characterised in that** the partially aromatic polyamides b) are selected from the group formed by polyamides, the recurring units of which are derived from at least one aliphatic dicarboxylic acid, optionally one or more aromatic dicarboxylic acids and p-xylylenediamine and/or m-xylylenediamine.

6. A flameproofed polyamide moulding compound according to at least one of Claims 1 to 5, **characterised in that** the partially aromatic polyamides b) are selected from the group formed by polyamides, the recurring units of which are derived from terephthalic acid and/or isophthalic acid and optionally adipic acid and also hexamethylenediamine.

7. A flameproofed polyamide moulding compound according to at least one of Claims 1 to 6, **characterised in that** a phosphinic acid salt of Formula (I) and/or a diphosphinic acid salt of Formula (II) and/or polymers thereof, wherein M stands for calcium or aluminium ions, is used as flameproofing agent c).

8. The use of the flameproofed moulding compounds according to one of Claims 1 to 7 for the production of mouldings.

9. The use of the flameproofed moulding compounds according to Claim 8 for the production of mouldings which meet the requirements of flammability rating V0 according to UL94 for a test specimen thickness of max. 0.8 mm.

## Revendications

1. Matières de moulage ignifugées en polyamide, constituées de:
a) 20 à 80 % en poids d'un ou plusieurs polyamides aliphatiques,
b) 1 à 40% en poids d'un ou plusieurs polyamides partiellement aromatiques,
c) 1 à 18 % en poids d'un agent ignifuge constitué d'un sel d'acide phosphinique de formule (I) et/ou d'un sel d'acide diphosphinique de formule (II) et/ou de leurs polymères : 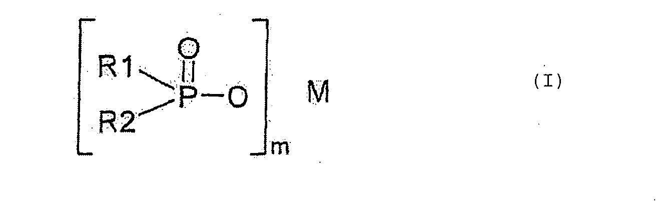 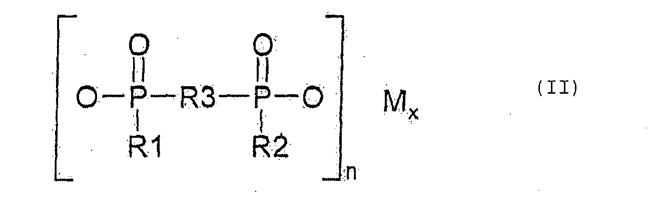 dans lesquelles formules :
R¹ et R² sont identiques ou différents et représentent un alkyle en C₁-C₆, linéaire ou ramifié, et/ou un aryle ;
R³ représente un alkylène en C₁-C₁₀, linéaire ou ramifié, un arylène, un alkylarylène ou un arylalkylène en C₆-C₁₀ ;
M représente un ion métallique du 2^{ème} ou du 3^{ème} groupe principal ou sous-groupe du système périodique ;
mvaut2ou3.;
n vaut 1 ou 3 ;
x vaut 1 ou 2,
d) 5 à 60 % en poids d'une charge en forme de fibres ou de particules ou de leurs mélanges,
e) 0,05 à 10 % en poids d'additifs, choisis parmi des stabilisateurs, des agents auxiliaires de traitement, des agents anti-gouttes, des colorants et/ou des pigments,
la somme des fractions a) à e) représentant 100 % en poids.

2. Matières de moulage ignifugées en polyamide selon la revendication 1, **caractérisées en ce qu'**elles contiennent 5 à 15 % en poids de l'agent ignifuge.

3. Matières de moulage ignifugées en polyamide selon la revendication 1 ou 2, **caractérisées en ce que** les polyamides aliphatiques a) sont choisis dans le groupe constitué des homopolyamides et des copolyamides, dont les unités récurrentes proviennent d'amines aliphatiques, d'acides dicarboxyliques aliphatiques et/ou d'acides aminocarboxyliques aliphatiques, les acides aminocarboxyliques pouvant également être utilisés sous la forme de leur lactame.

4. Matières de moulage ignifugées en polyamide selon au moins l'une quelconque des revendications 1 à 3, **caractérisées en ce que** les polyamides partiellement aromatiques b) sont choisis dans le groupe constitué des polyamides, dont les unités récurrentes proviennent d'au moins un acide dicarboxylique aromatique, éventuellement, d'un ou plusieurs acides dicarboxyliques aliphatiques et d'une ou plusieurs diamines aliphatiques et/ou cycloaliphatiques.

5. Matières de moulage ignifugées en polyamide selon au moins l'une quelconque des revendications 1 à 3, **caractérisées en ce que** les polyamides partiellement aromatiques b) sont choisis dans le groupe constitué des polyamides, dont les unités récurrentes proviennent d'au moins un acide dicarboxylique aliphatique, éventuellement, d'un ou plusieurs acides dicarboxyliques aromatiques, ainsi que de la p-xylylènediaminé et/ou de la m-xylylènediamine.

6. Matières de moulage ignifugées en polyamide selon au moins l'une quelconque des revendications 1 à 5, **caractérisées en ce que** les polyamides partiellement aromatiques b) sont choisis dans le groupe constitué des polyamides, dont les unités récurrentes proviennent de l'acide téréphtalique et/ou de l'acide isophtalique et, éventuellement, de l'acide adipique, ainsi que de l'hexaméthylène-diamine.

7. Matières de moulage ignifugées en polyamide selon au moins l'une des revendications 1 à 6, **caractérisées en ce que** l'on utilise, comme agent ignifuge c), un sel d'acide phosphinique de formule (I) et/ou un sel d'acide diphosphinique de formule (II) et/ou leurs polymères, dans lesquels M représente des ions de calcium ou d'aluminium.

8. Utilisation des Matières de moulage ignifugées selon l'une des revendications 1 à 7, pour la fabrication de corps de moulage.

9. Utilisation des Matières de moulage ignifugées selon la revendication 8 pour la fabrication de corps de moulage, qui répondent à l'exigence de la classe d'inflammabilité V0 selon la norme UL94, pour une éprouvette d'essai d'une épaisseur de 0,8 mm au maximum.
